# EUROPÄISCHE PATENTSCHRIFT

(11) **EP 1 102 920 B1**
(45) Veröffentlichungstag und Bekanntmachung des Hinweises auf die Patenterteilung: **11.09.2002**
(21) Anmeldenummer: 99931169.9
(22) Anmeldetag: 24.06.1999
(51) Int. Cl.: F01N 3/02, F01N 3/18, F01N 3/24

(54) **VERFAHREN UND VORRICHTUNG ZUR DE-SULFATIERUNG EINER KATALYSATOREINRICHTUNG**
METHOD AND DEVICE FOR DESULFURISING A CATALYST SYSTEM
PROCEDE ET DISPOSITIF DE DESULFATATION D'UN SYSTEME CATALYSEUR

(30) Priorität: 07.08.1998 DE 19835799; 04.11.1998 DE 19850757
(43) Veröffentlichungstag der Anmeldung: 30.05.2001
(73) Patentinhaber: Volkswagen Aktiengesellschaft, 38436 Wolfsburg (DE)
(72) Erfinder: BOSSE, Rolf, D-38440 Wolfsburg (DE); WENDT, Jürgen, D-38442 Wolfsburg (DE)
(86) Internationale Anmeldenummer: EP9904396
(87) Internationale Veröffentlichungsnummer: WO00008311

(56) Entgegenhaltungen:
- EP-A- 0 668 437
- US-A- 4 756 155
- US-A- 5 743 084
- DATABASE WPI Section Ch, Week 199816 Derwent Publications Ltd., London, GB; Class E36, AN 1998-171757 XP002900643 & JP 02 727906 B (TOYOTA JIDOSHA KK), 18. März 1998 (1998-03-18)
- PATENT ABSTRACTS OF JAPAN vol. 018, no. 691 (M-1731), 26. Dezember 1994 (1994-12-26) & JP 06 272541 A (TOYOTA MOTOR CORP), 27. September 1994 (1994-09-27)

## Beschreibung

Die vorliegende Erfindung betrifft ein Verfahren zur De-Sulfatierung einer einer mager betriebenen Brennkraftmaschine nachgeschalteten Katalysatoreinrichtung, wie z. B. ein NOₓ-Speicherkatalysator und/oder ein Partikelkatalysator. Die Erfindung betrifft zudem eine Abgasreinigungsvorrichtung zur Durchführung dieses Verfahrens.

Bei Verwendung schwefelhaltiger Kraftstoffe der heute üblichen Art werden an den katalytisch wirksamen Oberflächen der zur Abgasreinigung von mager betriebenen Brennkraftmaschinen oder Motoren eingesetzten Katalysatoreinrichtung, wie z. B. NOₓ-Speicherkatalysatoren und/oder Partikelkatalysatoren stets auch stabile Sulfate gebildet, die zu einer schleichenden Vergiftung und damit zu einer allmählichen Desaktivierung der verwendeten Katalysatoreinrichtung führen. Im Unterschied zu einer Bleivergiftung bei
3-Wege-Katalysatoren ist eine solche Sulfatvergiftung jedoch vollständig oder zumindest überwiegend reversibel, sofern hinreichend hohe Katalysatortemperaturen von mehr als etwa 550 °C und ein hinreichend hohes Schadstoffangebot bei geringem Restsauerstoffgehalt vorliegen.

In der Praxis wird daher durch Einstellung einer geeigneten Temperatur und Absenkung des Sauerstoffgehaltes, d. h. Verringerung des Lambda-Wertes, in periodischen Abständen eine Entschwefelung oder De-Sulfatierung durchgeführt. Bei Mager- und DI-Ottomotoren können die für eine Regeneration erforderlichen hohen Regenerationstemperaturen in weiten Bereichen des Motorkennfeldes durch einen auch langfristig möglichen Betrieb mit λ ≤ 1 erzielt werden. Bei Dieselmotoren, insbesondere bei DI-Dieselmotoren, ist jedoch wegen des grundsätzlich mageren Betriebs und der hohen Abgasmassenströme ein Erreichen der erforderlichen hohen De-Sulfatierungstemperaturen üblicherweise nicht möglich, da allenfalls im vollastnahen Bereich entsprechende Temperaturen erreichbar sind. Allein durch Änderung der Motorbetriebsweise kann daher bei Dieselmotoren keine De-Sulfatierung sichergestellt werden, so daß insbesondere bei diesen Motoren ein großes Interesse an wirkungsvollen De-Sulfatierungsverfahren besteht.

Aus der JP-A-06272541 ist ein im Abgaspfad eines Dieselmotors angeordneter spezieller Partikelfilter bekannt, der ein NOₓ-Speichermedium trägt, welches durch Abbrennen der in dem Partikelfilter gespeicherten Partikel auf eine geeignete De-Sulfatierungstemperatur erhitzt wird. Ein elektronisches Steuergerät dient zur Steuerung der Einspeisung eines Reduktionsmittels in den Abgaspfad und der Einstellung einer zugeordneten Drosselklappe. Eine Einrichtung zur Bestimmung der Partikel- und/oder Schwefelbeladung und eine Einrichtung zur Steuerung der Regeneration des Partikelfilters in Abhängigkeit von den ermittelten Beladungswerten ist dem genannten Dokument nicht zu entnehmen.

Der vorliegenden Erfindung liegt daher die Aufgabe zugrunde, ein neues Verfahren zur De-Sulfatierung einer einer mager betriebenen Brennkraftmaschine oder einem Motor nachgeschalteten Katalysatoreinrichtung, wie z.B. ein NOₓ-Speicherkatalysator und/oder ein Partikelkatalysator zu schaffen, mit dem sich die für eine De-Sulfatierung erforderlichen hohen Temperaturen problemlos erzeugen und ausreichend lange aufrechterhalten lassen, um eine Regeneration der Katalysatoreinrichtung zu ermöglichen. Die Aufgabe besteht zudem in der Schaffung einer Abgasreinigungsvorrichutng zur Durchführung dieses Verfahrens.

Diese Aufgabe wird erfindungsgemäß dadurch gelöst, daß die erforderliche De-Sulfatierungstemperatur zumindest teilweise durch die Regeneration eines Partikelfilters erzeugt wird, das der verwendeten Katalysatoreinrichtung im Abgasstrang einfach so vorgeschaltet wird, daß eine ausreichend gute Wärmekopplung gegeben ist. Durch Regeneration des Partikelfilters, d.h. Abbrennen der gespeicherten Kohlenstoffmasse, In gewissen zeitlichen Abständen wird die verwendete Katalysatoreinrichtung, die vorzugsweise einen NOₓ-Speicherkatalysator und/oder einen Partikelkatalysator umfaßt, somit für einen hinreichend langen Zeltraum so stark erhitzt, daß der eingelagerte Schwefel in Form schwefelhaltiger Verbindungen, wie z.B. SO₂, freigesetzt wird und die Katalysatoroberfläche ihre ursprüngliche katalytische Aktivität im wesentlichen zurückerhält. Erfindungsgemäß wird somit einfach die bei der Regeneration eines Partlkeifilters freiwerdende Wärme zur Regeneration der desaktivierten Katalysatoroberfläche verwendet, so daß temperaturerhöhende Maßnahmen der aus dem Stand der Technik bekannten Art im wesentlichen unterbleiben können oder allenfalls zur Optimierung des erfindungsgemäßen Verfahrens eingesetzt werden.

Der optimale Zeitpunkt für eine Regeneration wird hierbei dadurch ermittelt, daß die Schwefelbeladung der Katalysatoreinrichtung und gegebenenfalls die Partikelbeladung des Partikelfilters mittels bekannter Verfahren bestimmt und mit vorbestimmten Grenzwerten verglichen werden, die beispielsweise ein Absinken der katalytischen Aktivität unter einen gerade noch zulässigen Minimalwert infolge einer zu hohen Schwefelbeladung bzw. einen Anstieg der beim Abbrennen gespeicherten Kohlenstoffpartikel frelwerdenden Energie in einen Bereich anzeigen, in dem die De-Sulfatlerung nicht mehr kontrolliert ablaufen würde und mit einer eventuellen Schädigung der Katalysatoreinrichtung oder des Katalysatorsystems zu rechnen wäre. Bei Überschreiten zumindest eines Grenzwertes für die Schwefelbeladung wird automatisch eine Regeneration des Partikelfilters und damit auch eine Regeneration der vergifteten Katalysatoreinrichtung eingeleitet.

Zur Optimierung des erfindungsgemäßen Verfahrens, das wegen der auftretenden Partikelemission insbesondere für Brennkraftmeschinen mit Direkteinspritzung geeignet ist, wird die Brennkraftmaschine während der De-Sulfatlerung vorzugswelse im fetten Bereich betrieben, um ausreichend hohe Resktionsgeschwindigkeiten mit entsprechend kurzen De-Sulfatierungszeiten erreichen zu können.

Um die bei der Regeneration des Partikelfilters freiwerdende Energie unter Vermeidung von Wärmeverlusten möglichst gut ausnutzen zu können, wird der Partikelfilter benachbart zur der Katalysatoreinrichtung angeordnet, wobei der Abstand vorzugsweise maximal 1 m beträgt. Eine optimale Energieauanutzung ergibt sich bei einer Integration der genannten Bauteile in einem gemeinsamen Gehäuse, da hierbei die Wärmeverluste minimiert werden.

Eine Abgasreinigungsvorrichtung zur Durchführung dieses erfindungsgemäßen Verfahrens umfaßt eine Katalysatoreinrichtung, wie z.B. ein NOₓ-Speicherkatalysator und/oder ein Partikelkatalysator, einen vorgeschalteten zusätzlichen separaten Partikelfilter und eine Wärmeübertragungseinrichtung zur Übertragung der bei einer Regeneration des Partikelfilters, d.h. bei einem Abbrennen der dort gespeicherten Kohlenstoffmasse, freiwerdenden Energie auf die Katalysatoreinrichtung. Diese ist dem Partikelfliter In der Abgasanlage einfach so nachgeschaltet, daß eine ausreichend gute Wärmekopplung zur Erzeugung der zur De-Sulfatierung erforderlichen hohen Temperatur gegeben ist.

Zur Bestimmung der optimalen De-Sulfatierungs- bzw. Filterregenerationszeitpunktes und als Schutz der Katalysatorelnrichtung gegen eine zu hohe Wärmebelastung beim Abbrennen der gespeicherten Partikelmasse, umfaßt die Abgasreinigungsvorrichtung erfindungsgemäß vorzugsweise eine Einrichtung zum Bestimmen der Partikelbetadung des Partikelfilters und/oder der Schwefelbeladung der Katalysatoreinrichtung. Die bestimmten Beladungswerte werden von der Einrichtung mit vorgegebenen Grenzwerten verglichen, bei deren Überschreiten automatisch eine Regeneration des Partikeifilters eingeleitet wird. se daß die Funktionstüchtigkeit der Katalysatoreinrichtung bzw. der Abgasreinigungsvorrichtung und die ordnungsgemäße Reinigung der Abgase jederzeit gewährleistet ist.

Weitere Merkmale und Vorteile des erfindungsgemäßen Verfahrens und der erfindungsgemäßen Vorrichtung ergeben sich nicht nur aus den zugehörigen Ansprüchen - für sich und/oder in Kombination - sondern auch aus der nachfolgenden Beschreibung bevorzugter Ausführungsbeispiele in Verbindung mit den zugehörigen Zeichnungen. In den Zeichnungen zeigen in schematischer Darstellung:
- Fig. 1: eine erste Ausführungsform einer erfindungsgemäßen Abgasreinigungsvorrichtung;
- Fig. 2: eine zweite Ausführungsform einer erfindungsgemäßen Abgasreinigungsvorrichtung; und
- Fig. 3: eine dritte Ausführungsform einer erfindungsgemäßen Abgasreinigungsvorrichtung.

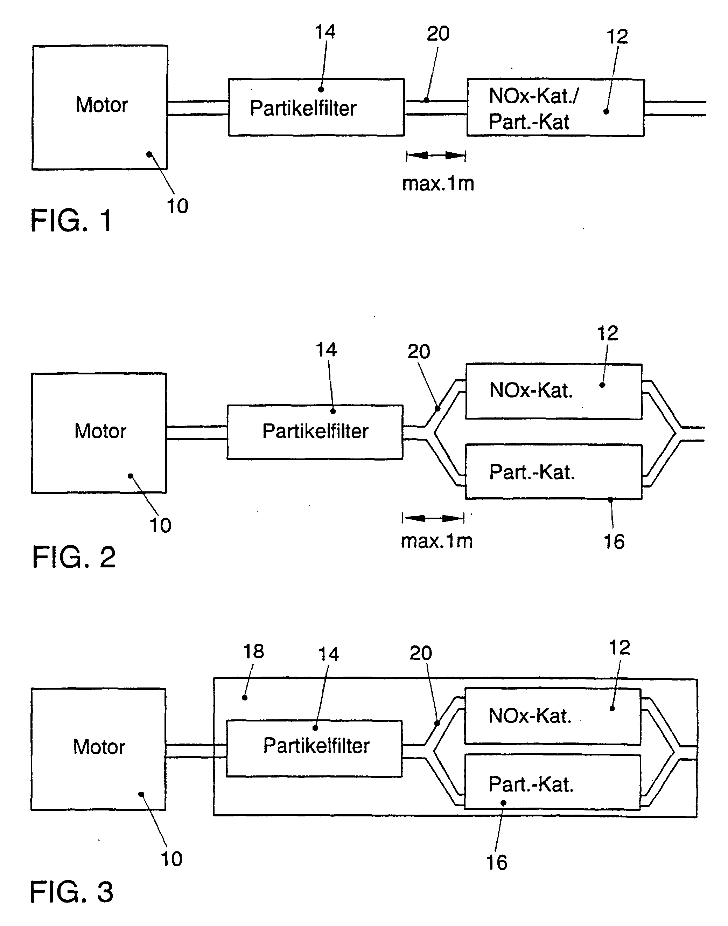

Fig. 1 zeigt einen mager betriebenen Motor 10, wie z. B. einen Direkteinspritzer-Dieselmotor, mit einer nachgeschaltenen Abgasreinigungsvorrichtung 12, 14, die einen NOₓ-Speicherkatalysator 12 zur Speicherung von Stickoxiden und einen Partikelfilter 14 zur Verringerung der Partikelemission im Abgas umfaßt. Der Partikelfilter 14 ist hierbei in einem Abstand von maximal 1 m vor dem NOₓ-Speicherkatalysator 12 im Abgasstrang angeordnet, um unnötige Wärmeverluste über die Abgasleitung 20 zu vermeiden und die bei der Regeneration des Partikelfilters 14 freiwerdende Wärme möglichst optimal zur De-Sulfatierung des Katalysators 12 ausnutzen zu können.

Während des Motorbetriebes wird durch eine (nicht dargestellte) Einrichtung die Schwefelbeladung des NOₓ-Speicherkatalysators 12 und die Partikelbeladung des Partikelfilters 14 bestimmt und mit vorgegebenen Grenzwerten verglichen, die einem Absinken der katalytischen Aktivität, d. h. der NOₓ-Speicherfähigkeit, unter einen vorgegebenen Minimalwert bzw. einer nicht mehr tolerierbaren Wärmebelastung des Katalysators 12 beim Abbrennen der in dem Partikelfilter 14 gespeicherten Kohlenstoffpartikel entsprechen. Beim Unterschreiten eines dieser Grenzwerte wird automatisch die Regeneration des Partikelfilters 14, d.h. das Abbrennen der dort gespeicherten Kohlenstoffmasse eingeleitet, wobei der nachgeschaltete Katalysator 12 für eine hinreichend lange Zeit auf eine zur De-Sulfatierung geeignete Temperatur erhitzt und der eingelagerte Schwefel im wesentlichen in Form schwefelhaltiger Verbindungen, wie z. B. SO₂, freigesetzt wird. Die Katalysatoroberfläche erhält hierdurch ihre katalytische Wirksamkeit und ihre Fähigkeit zum Einlagern von Stickoxiden zurück.

Zur Steigerung der Reaktionsgeschwindigkeit, d. h. zur Verringerung der De-Sulfatierungszeit, wird der Motor 10 während einer solchen De-Sulfatierung im fetten Bereich betrieben und der Lambda-Wert durch ein geeignetes Motormanagement, wie z. B. Schließen einer Drosselklappe und Erhöhung der Einspritzmenge, auf einen Wert von weniger als 1 abgesenkt.

Die Abgasreinigungsvorrichtung 12, 14 kann anstatt des NOₓ-Speicherkatalysators 12 auch einen Partikelkatalysator oder dergleichen umfassen. In diesem Fall wird neben der Partikelbeladung des Partikelfilters 14 die Schwefelbeladung des Partikelkatalysators bestimmt und zur Steuerung des Regenerationsprozesses der Abgasreinigungsvorrichtung verwendet.

Bei dem in Fig. 2 dargestellten Ausführungsbeispiel umfaßt die Abgasreinigungsvorrichtung zusätzlich zu dem NOₓ-Speicherkatalysator 12 noch einen parallel geschalteten Partikelkatalysator 16. Die beiden Katalysatoren 12, 16 sind auch hier wiederum zur Gewährleistung einer guten Wärmekopplung in einem Abstand von weniger als einem Meter hinter dem Partikelfilter 14 im Abgasstrang 20 angeordnet.

Zur Steuerung des Regenerationsvorgangs der Abgasreinigungsvorrichtung 12, 14, 16 wird neben der Partikelbeladung des Partikelfilters 14 die Schwefelbeladung des NOₓ-Speicherkatalysators und des Partikelkatalysators 16 bestimmt und mit vorgegebenen maximal zulässigen Beladungen verglichen. Bei Überschreiten zumindest einer dieser Grenzwerte wird automatisch wiederum eine Regeneration des Partikelfilters 14 eingeleitet. Die hierbei freiwerdende Wärme wird über die Abgasleitung 20 auf die beiden Katalysatoren 12, 16 übertragen, die aufgrund ihrer parallelen Anordnung gleichzeitig von den erwärmten Abgasen umströmt und dabei gleichzeitig de-sulfatiert werden.

Bei dem in Fig. 3 dargestellten Ausführungsbeispiel sind der Partikelfilter 14, der NOₓ-Speicherkatalysator 12 und der Partikelkatalysator 16 zur Minimierung von Wärmeverlusten entsprechend der in Fig. 2 dargestellten Anordnung dicht zueinander beabstandet in einem gemeinsamen Gehäuse 18 integriert.

## Patentansprüche

1. Verfahren zur De-Sulfatierung einer einer mager betriebenen Brennkraftmaschine (10) nachgeschalteten Katalysatoreinrichtung (12, 16) durch Einstellung einer geeigneten De-Sulfatierungstemperatur, **dadurch gekennzeichnet, daß** die De-Sulfatierungstemperatur zumindest teilweise durch die Regeneration eines der Katalysatoreinrichtung (12, 16) vorgeschalteten Partikelfilters (14) erzeugt wird, und daß die Schwefelbeladung der Katalysatoreinrichtung (12, 16) und gegebenenfalls die Partikelbeladung des Partikelfilters (14) bestimmt werden und bei Überschreitung zumindest eines vorbestimmten Grenzwertes für die Schwefelbeladung die Regeneration des Partikelfilters (14) eingeleitet wird

2. Verfahren nach Anspruch 1, **dadurch gekennzeichnet, daß** die Katalysatoreinrichtung (12, 16) einen NOₓ-Speicherkatalysator (12) und/oder einen Partikelkatalysator (16) umfaßt.

3. Verfahren nach einem der vorhergehenden Ansprüche, **dadurch gekennzeichnet, daß** die Brennkraftmaschine (10) bei der De-Sulfatierung im fetten Bereich betrieben wird.

4. Verfahren nach einem der vorhergehenden Ansprüche, **dadurch gekennzeichnet, daß** die Brennkraftmaschine (10) ein Direkteinspritzer-Ottomotor oder ein entsprechender Dieselmotor ist.

5. Verfahren nach einem der vorhergehenden Ansprüche, **dadurch gekennzeichnet, daß** der Partikelfilter (14) zur Schaffung einer ausreichend guten Wärmekopplung benachbart zu der Katalysatoreinrichtung (12, 16) angeordnet wird.

6. Verfahren nach Anspruch 5, **dadurch gekennzeichnet, daß** der Abstand weniger als 1 m beträgt.

7. Verfahren nach Anspruch 5 oder 6, **dadurch gekennzeichnet, daß** der Partikelfilter (14) mit der Katalysatoreinrichtung (12, 16) in einem Gehäuse (18) angeordnet ist.

8. Abgasreinigungsvorrichtung für eine Brennkraftmaschine (10) mit einer Katalysatoreinrichtung (12, 16), **gekennzeichnet durch** einen vorgeschalteten, zusätzlichen separaten Partikelfilter (14) und eine Wärmeübertragungseinrichtung (20) zur Übertragung der bei einer Regeneration des Partikelfilters (14) freiwerdenden Wärme auf die Katalysatoreinrichtung (12, 16).

9. Vorrichtung nach Anspruch 8, **dadurch gekennzeichnet, daß** die Katalysatoreinrichtung (12, 16) einen NOₓ-Speicherkatalysator (12) und/oder einen Partikelkatatysator (16) umfaßt.

10. Vorrichtung nach Anspruch 8 oder 9, **gekennzeichnet durch** eine Einrichtung zur Bestimmung der Partikelbeladung des Partikelfilters (14) und/oder der Schwefelbeladung der Katalysatoreinrichtung (12, 16) und eine Steuerungseinrichtung für die Regeneration des Partikelfilters (14).

11. Vorrichtung nach einem der Ansprüche 8 bis 10, **dadurch gekennzeichnet, daß** die Brennkraftmaschine (10) ein Direkteinspritzer-Ottomotor oder ein entsprechender Dieselmotor ist.

12. Vorrichtung nach einem der Ansprüche 8 bis 11, **dadurch gekennzeichnet, daß** der Partikelfilter (14) zur Schaffung einer ausreichend guten Wärmekopplung benachbart zu der Katalysatoreinrichtung (12, 16) angeordnet ist.

13. Vorrichtung nach Anspruch 12, **dadurch gekennzeichnet, daß** der Abstand weniger als 1 m beträgt.

14. Vorrichtung nach Anspruch 12 oder 13, **dadurch gekennzeichnet, daß** der Partikelfilter (14) mit der Katalysatoreinrichtung (12, 16) in einem Gehäuse (18) angeordnet ist.

## Claims

1. Method for desulphatizing a catalyst device (12, 16) arranged downstream of an internal combustion engine (10) operated on a lean mixture by setting a suitable desulphatization temperature, **characterized in that** the desulphatization temperature is produced at least in part by the regeneration of a particle filter (14) arranged upstream of the catalyst device (12, 16), and **in that** the sulphur loading of the catalyst device (12, 16) and, if appropriate, the particle loading of the particle filter (14) are determined and regeneration of the particle filter (14) is initiated if at least one predetermined limiting value for the sulphur loading is exceeded.

2. Method according to Claim 1, **characterized in that** the catalyst device (12, 16) comprises an NOₓ storage catalyst (12) and/or a particle catalyst (16).

3. Method according to one of the preceding claims, **characterized in that** the internal combustion engine (10) is operated in the rich range during desulphatization.

4. Method according to one of the preceding claims, **characterized in that** the internal combustion engine (10) is a direct-injection Otto engine or a corresponding diesel engine.

5. Method according to one of the preceding claims, **characterized in that** the particle filter (14) is arranged adjacent to the catalyst device (12, 16) to provide adequate thermal coupling.

6. Method according to Claim 5, **characterized in that** the spacing is less than 1 m.

7. Method according to Claim 5 or 6, **characterized in that** the particle filter (14) is arranged in a housing (18) with the catalyst device (12, 16).

8. Exhaust scrubbing device for an internal combustion engine (10) with a catalyst device (12, 16), **characterized by** a separate additional upstream particle filter (14) and a heat transfer device (20) for transferring the heat liberated during regeneration of the particle filter (14) to the catalyst device (12, 16).

9. Apparatus according to Claim 8, **characterized in that** the catalyst device (12, 16) comprises an NOₓ storage catalyst (12) and/or a particle catalyst (16).

10. Apparatus according to Claim 8 or 9, **characterized by** a device for determining the particle loading of the particle filter (14) and/or the sulphur loading of the catalyst device (12, 16) and a control device for the regeneration of the particle filter (14).

11. Apparatus according to one of Claims 8 to 10, **characterized in that** the internal combustion engine (10) is a direct-injection Otto engine or a corresponding diesel engine.

12. Apparatus according to one of Claims 8 to 11, **characterized in that** the particle filter (14) is arranged adjacent to the catalyst device (12, 16) to provide adequate thermal coupling.

13. Apparatus according to Claim 12, **characterized in that** the spacing is less than 1 m.

14. Apparatus according to Claim 12 or 13, **characterized in that** the particle filter (14) is arranged in a housing (18) with the catalyst device (12, 16).

## Revendications

1. Procédé de désulfuration d'un équipement de catalyseur (12, 16), placé à la suite d'une machine à combustion interne (10), fonctionnant en régime maigre, par réglage d'une température de désulfuration appropriée, **caractérisé en ce que** la température de désulfuration est au moins partiellement produite par la régénération d'un filtre à particules (14), placé avant l'équipement de catalyseur (12, 16), et **en ce que** le chargement en soufre de l'équipement de catalyseur (12, 16) et, le cas échéant, le chargement en particules du filtre à particules (14) sont déterminés et **en ce que**, en cas de dépassement d'au moins une valeur limite prédéterminée pour le chargement en soufre, la régénération du filtre à particules (14) est initiée.

2. Procédé selon la revendication 1, **caractérisé en ce que** l'équipement de catalyseur (12, 16) comprend un catalyseur d'accumulation de NOx (12) et/ou un catalyseur à particules (16).

3. Procédé selon l'une quelconque des revendications précédentes, **caractérisé en ce que** la machine à combustion interne (10) fonctionne, lors de la désulfuration, dans le domaine à régime riche.

4. Procédé selon l'une quelconque des revendications précédentes, **caractérisé en ce que** la machine à combustion interne (10) est un moteur Otto à injection directe ou un moteur diesel correspondant.

5. Procédé selon l'une quelconque des revendications précédentes, **caractérisé en ce que** le filtre à particules (14), dans l'optique de la création d'un accouplement thermique suffisamment bon, est disposé au voisinage de l'équipement de catalyseur (12, 16).

6. Procédé selon la revendication 5, **caractérisé en ce que** l'écart est de moins de 1 m.

7. Procédé selon la revendication 5 ou 6, **caractérisé en ce que** le filtre à particules (14) est disposé avec l'équipement de catalyseur (12, 16) dans une boîte (18).

8. Dispositif de purification des gaz d'échappement d'une machine à combustion interne (10), ayant un équipement de catalyseur (12, 16), **caractérisé par** un filtre à particules (14) supplémentaire, séparé, placé avant et un équipement de transfert de la chaleur (20) en vue du transfert, à l'équipement de catalyseur (12, 16), de la chaleur dégagée lors d'une régénération du filtre à particules (14).

9. Dispositif selon la revendication 8, **caractérisé en ce que** l'équipement de catalyseur (12, 16) comprend un catalyseur d'accumulation de NOx (12) et/ou un catalyseur à particules (16).

10. Dispositif selon la revendication 8 ou 9, **caractérisé par** un équipement en vue de la détermination du chargement en particules du filtre à particules (14) et/ou du chargement en soufre de l'équipement de catalyseur (12, 16) et par un équipement de commande pour la régénération du filtre à particules (14).

11. Dispositif selon l'une quelconque des revendications 8 à 10, **caractérisé en ce que** la machine à combustion interne (10) est un moteur Otto à injection directe ou un moteur diesel correspondant.

12. Dispositif selon l'une quelconque des revendications 8 à 11, **caractérisé en ce que** le filtre à particules (14), dans l'optique de la création d'un accouplement thermique suffisamment bon, est disposé au voisinage de l'équipement de catalyseur (12, 16).

13. Dispositif selon la revendication 12, **caractérisé en ce que** l'écart est de moins de 1 m.

14. Dispositif selon la revendication 12 ou 13, **caractérisé en ce que** le filtre à particules (14) est disposé avec l'équipement de catalyseur (12, 16) dans une boîte (18).
